Europäisches Patentamt

European Patent Office

Office européen des brevets

(11) Publication number: **0 208 493**
**B1**

(12) **EUROPEAN PATENT SPECIFICATION**

(45) Date of publication of patent specification: 03.10.90

(51) Int. Cl.⁵: **B 23 D 27/00**

(21) Application number: 86305063.9

(22) Date of filing: 30.06.86

(54) Nibbling tool.

(30) Priority: 02.07.85 GB 8516711
03.03.86 GB 8605218
21.04.86 GB 8609715

(43) Date of publication of application:
14.01.87 Bulletin 87/03

(45) Publication of the grant of the patent:
03.10.90 Bulletin 90/40

(84) Designated Contracting States:
AT BE CH DE FR GB IT LI LU NL SE

(56) References cited:
CH-A- 268 237
DE-A-2 929 882
FR-A-2 190 042
GB-A-1 485 795
GB-A-2 099 744
US-A-3 988 829

(73) Proprietor: Turner (Precision Engineering)
Braeside Works Teevan Road
Croydon CR9 6DP (GB)

(72) Inventor: Turner, Kenneth John
Braeside Works Teevan Road
Croydon CR9 6DP (GB)

(74) Representative: Spence, Anne et al
Spence & Townsend Mill House Wandle Road
Beddington Croydon Surrey CR0 4SD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a nibbling tool for shearing sheet material and more particularly to a hand held tool which may have its own complete drive or have a drive means comprising a rotary drive shaft designed to be coupled to an external drive means, for example the chuck of a conventional electric drill.

Nibbling tools for shearing a channel in sheet material by relative movement between the tool and material in a direction along the channel are known, for example from GB—A—2099744, comprising a body, a punch, drive means for reciprocating the punch and a die defining a channel for guiding the punch for reciprocating movement, the punch and die having co-operating curved cutting edges extending transversely to the channel to be cut such that each reciprocal movement removes a crescent shaped chip of material so as to extend the channel. Normally a drive shaft is mounted in the body for rotation about its axis and coupling means couple the punch and drive shaft to convert the rotational movement to linear reciprocation of the punch. Preferably the die has a lower guide portion in which the lower end of the punch is guided and this is connected to the main body portion of the die by a narrow web portion. One object of the present invention is to obtain a cleaner cut than that obtained by conventional nibbling tools. Another object, at least in the preferred embodiment, is to provide an improved die and punch mounting.

Accordingly in one aspect the invention provides a nibbling tool for cutting a channel in sheet material by relative movement between the tool and the material in the direction of the channel comprising a body, a punch, drive means for reciprocating the punch, a die mounted to the body and having a main body portion defining a channel for guiding the punch for reciprocating movement, a lower portion in which the lower end of the punch is received and a web portion connecting the main portion and the lower portion, the punch and die having co-operating substantially circular cutting edges extending transversely of said direction of relative movement such that each reciprocating movement removes a crescent shaped chip of material, the web portion having a width substantially corresponding to the transverse width of the cutting edges in a direction normal to the length of the channel characterised in that the corners connecting the web portion with the main body portion and/or the lower guide portion are radiused or chamfered so that they serve, as the web tracks through the cut, to remove sharp edges or burrs by vibrating against them. This produces a cleaner cut.

In known nibbling tools the die and punch mounting is unsatisfactory. For example in GB—A—2099744 the die cannot be rotated and the whole tool has to be dismantled to change the die. In the tool of GB—A—1485795 the die is mounted to a separate punch guide sleeve and this leads to inaccuracies in alignment between the die and punch with decreased life of the tool. While GB—A—636983 has a die which can be adjusted and removed, in order to change the punch the whole drive, which is packed with grease has to be dismantled. According to a preferred feature which may be claimed independently releasable connecting means connecting the punch to the drive means such that when the die is removed from the body the punch can be removed from the body through the bore without dismantling the drive means.

Preferably the die can be retained in any angular position about its axis of rotation relative to the body.

Preferably the die has a circular sectioned shank located as a good sliding fit in a bore in the body, the shank being provided with at least one locating recess into which a retaining member movable in the body can be inserted to locate the die against axial and rotational movement.

According to one feature, the punch has a shaft portion and a head which includes an upward cutting face on its upper surface and which is connected to the shaft portion by a tapered portion, the shaft and head portion both being cylindrical and preferably of the same diameter.

According to another feature a handle is connectable to the upper part of the body coaxial with the punch and die and the upper end of the punch is a sliding fit in a bore in the handle (preferably in a bush) so that the upper end of the punch is guided.

According to another feature the punch is also guided for sliding movement in a lower part of the die (below the cutting plane) so that the punch is guided at each end throughout its stroke in both directions.

According to another feature the punch has a shaft portion and a guide portion of lesser diameter than the shaft portion and connected therewith, the guide portion being eccentrically mounted with respect to the shaft portion so that one axially extending edge thereof is aligned with an edge of the shaft portion.

According to a further feature the drive means comprises coupling means consisting of a punch location block secured to the punch shaft and defining a non circular recess on one side opposite the head of a rotatable drive shaft, and a drive transfer bearing fitted in the recess and lightly compressed or cushioned between the location block and the drive shaft head and having a recess receiving an eccentrically mounted pin on the drive shaft head. This arrangement ensures improved smoothness of action and torque transmission.

Embodiments of nibbling tool, in accordance with the invention, will now be described by way of example only with reference to the accompanying drawings of which:-

Fig. 1 is an elevational view of a nibbling tool,

Fig. 2 is a section on the line II—II of Fig. 1,

Fig. 3 parts A, B and C are respectively, enlarged views of two alternative forms of die web and an underneath plan view respectively of the die of the tool of Figs. 1 and 2,

Fig. 4A is a side view of the punch of the tool on an enlarged scale,

Fig. 4B shows a modified form of part of the punch of Fig. 4A.

Fig. 5 is a view similar to Fig. 2 showing an alternative form of tool,

Fig. 6 parts A and B show an enlarged side and end view of the punch of the Fig. 5 tool,

Fig. 7 parts A and B are side and front views of a nibbling tool coupled to a drive means,

Fig. 8 is a view of the parts forming the drive coupling of the tool, and

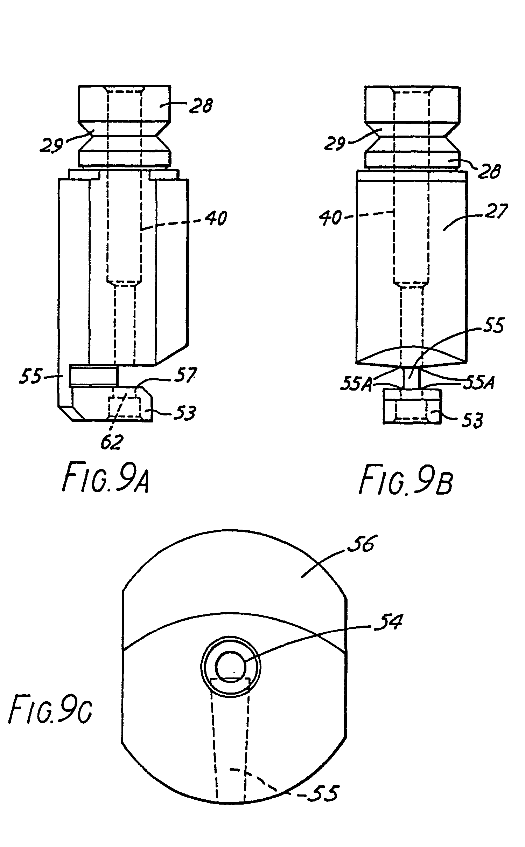

Fig. 9 parts A, B and C show respectively a side, front and plan view of the die of the Fig. 5 tool.

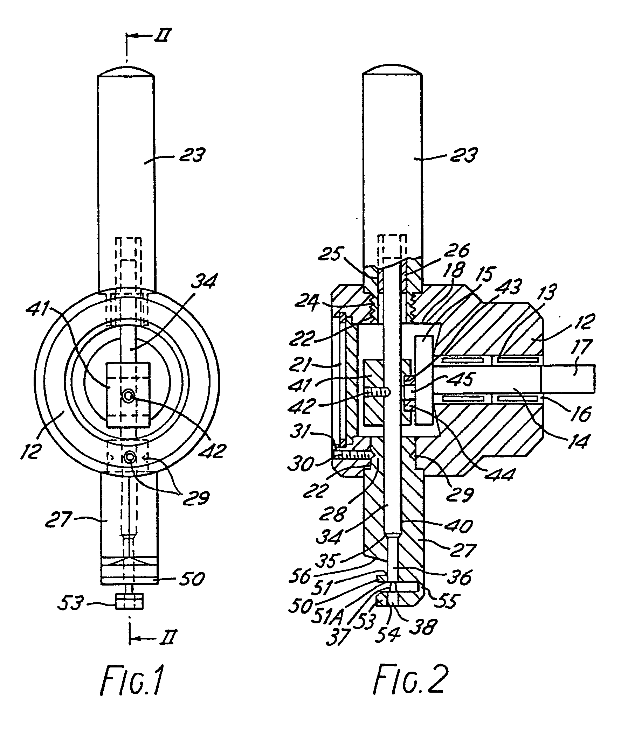

The nibbling tool of Figs. 1 to 4 comprises a body 12 having a first bore 13 in which a rotary shaft 14 having a head 15 is mounted in needle roller bearings 16. The projecting end 17 of the shaft is hexagonal to enable it to be easily gripped by, for example the chuck of a conventional electric drill. The bore 13 opens to a counter bore or recess 18 opening to the other side of the body, which recess is closed by a cover 20 retained by a circlip 21. A cross bore 22 extends through the bore and recess 18 at right angles to the bore 13. A handle 23 having a threaded shank 24 is screwed into the upper part of bore 22. The lower end of the handle defines a bore 25 in which is located a bearing bush 26. The handle may be covered with a rubber or plastics material sleeve grip with finger moulds.

A die 27 machined in a single piece from hexagonal bar has a circular sectioned cylindrical shank 28 located as a good sliding fit in the lower part of bore 22. The shank is formed with an annular right angled conical recess 29 and a conical ended screw 30 extending through a threaded bore 31 in the body located in the recess 29 to restrain the die against rotational and axial movement in the bore 22. Frictional engagement with screw 30 is sufficient to restrain the die against rotary movement. A punch 33 formed in a single piece has an upper shaft portion 34 joined at a shoulder 35 (which limits the downward stroke) to a lower, reduced section, shaft portion 36 connected by a tapered portion 37 to a head 38 having the same diameter as the lower shaft portion 36. The main upper shaft portion 34 of the punch is guided over a substantial part of the punch length (greater than one third) in a bore 40 in the die throughout vertical reciprocation. The upper end of the shaft is guided in the bush 26. The diameter of parts 36 and 38 is kept to at least 3 mm. preferably 3.5 mm. to give rigidity and strength with the actual cutting section width no more than 3 mm. The tapered portion 37 absorbs the shock impact of the material being cut and pushes it towards the cutting edge. This reduces vibration and allows a higher cutting speed. The punch thus extends substantially the full height of the body and die and is guided centrally and at its lower end by the die and at its upper end by the bush 26.

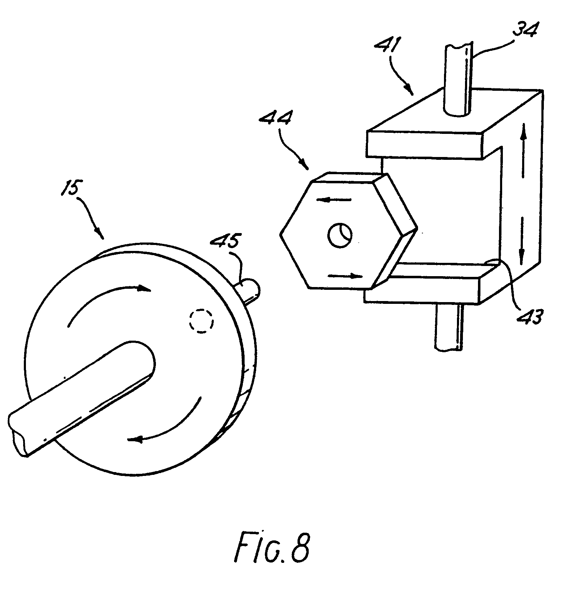

Coupling means (best seen in Fig. 8) for coupling the drive shaft 14 and the punch to convert the rotary movement of the drive shaft to vertical reciprocation of the punch comprise a punch location block 41 secured to the punch by a grub screw 42 and defining a slot recess 43 in its face opposite the shaft head 15. A drive transfer bearing block 44 is slidably located in the recess 43 for horizontal sliding therein and is lightly compressed between the punch location block and the head of the shaft and receives in a recess therein an eccentric driving pin 45 on the shaft head. The bearing block 44 is hexagonal or rectangular sectioned and receives the eccentric pin as a good fit thus providing positive location and support for the bearing. Rotation of the eccentrically mounted pin causes reciprocal vertical movement of the punch and block 41 while the transfer block 44 slides horizontally. Because a considerable area is in contact between the bearing block 44 and the sides of the recess 43, the contact forces are minimised and evenly distributed. This provides a compact, efficient and easily manufactured coupling but other forms of drive and coupling may be used for example compressed air drive. In addition this tool may have its own motor.

The punch is secured to the drive coupling only by the easily releasable connecting means in the form of grub screw 42, so that when the die or the handle is removed the punch can be withdrawn through the bore 22 without dismantling the drive coupling which is packed in grease. The cover plate 20 is formed with an aperture through which the grub screw 42 can be reached, for example by an Allen Key, preferably to release the punch without removing the cover plate.

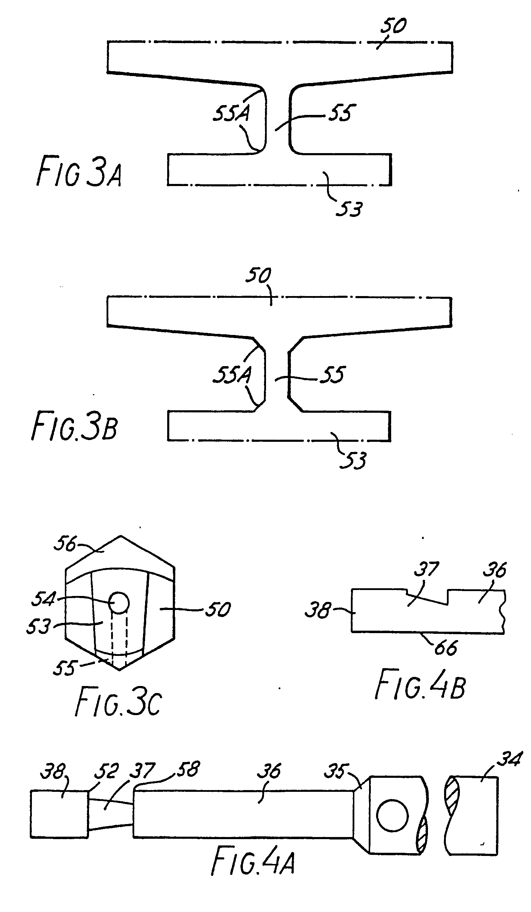

The lower portion of the die is cut away from one side above and below a projecting portion 50 formed with a bore 51 for receiving the punch, the lower edge of this bore defining a substantially circular cutting edge 51A co-operating with a substantially circular cutting edge 52 on the upper surface of the head 38 of the punch. The lower part 53 of the die defines a bore 54 in which the head of the punch is guided for reciprocation during the whole stroke of the punch, this lower part being connected to the main die block by a narrow web 55 which is the same thickness as the punch cutting diameter so that it fits in the cut being formed in material and facilitates material feed. The corners 55A where the web joins the die block and lower part 53 are radiused at 0.38 mm or chamfered, as seen in Figures 3A and 3B. The radiused or chamfered corners serve, as the web travels through the cut, to remove sharp edges or burrs by vibrating against them. For example the web thickness may vary between 0.292 cms and 0.200 cms. The scalloped Section 56 nearest to the shank which is profiled out to the inside edge of the internal bore is provided to allow for the clearance of swarf, dirt etc. after the upward cutting stroke of the punch.

By providing good guiding of the punch, the parts defining the cutting edges are sufficiently rigid and stable that a small gap between the cutting edges can be obtained, in this example 0.0127 mm., thus keeping burr to a minimum, and this burr is removed by the radiused or chamfered corners of this web.

The mounting of the punch and die allows adjustment of the cutting direction throughout the 360° range and easy replacement of the die without removing any other parts and easy replacement of the punch by removing the die and disengaging screw 42.

The tool may be used to cut on the downward stroke (or on both the upward and downward strokes) by using the cutting edges 57 and 58.

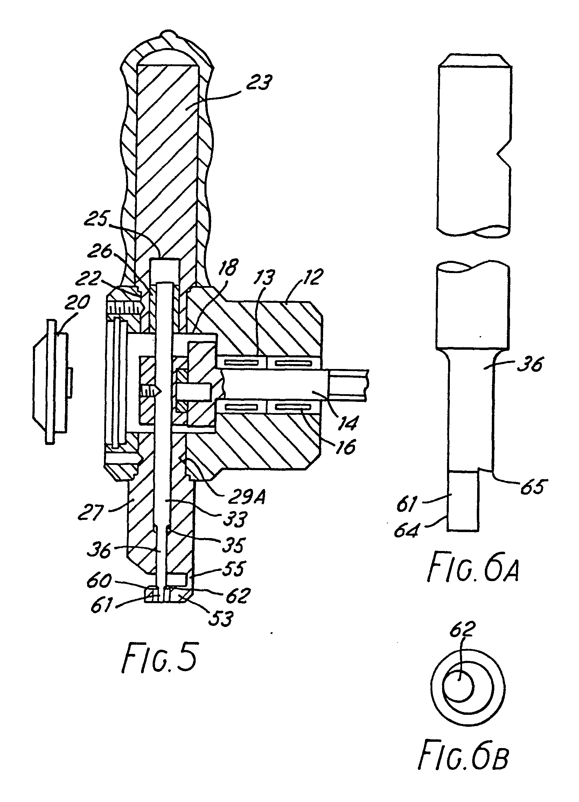

Figure 5 shows a modified tool having a punch intended to cut on the down stroke only. The tool is similar to that of Figures 1—4 and like parts have been given the same reference numerals. The lower shaft portion 36 of the punch is joined by a shoulder 60 to a lower guide portion 61 which is guided in a bore 62 in the lower die part 53.

In a modification shown in Figure 6 the lower guide part 61 is eccentrically mounted compared with the axis of the punch so that its back edge 64 is aligned with the corresponding edge of the shaft part 36 to give better guiding. The cutting edge is shown at 65. A similar modification to the punch of Figures 1—4 is shown in Figure 4B where the tapered portion 37 is eccentrically mounted to give a continuous back edge 66 acting as further guide.

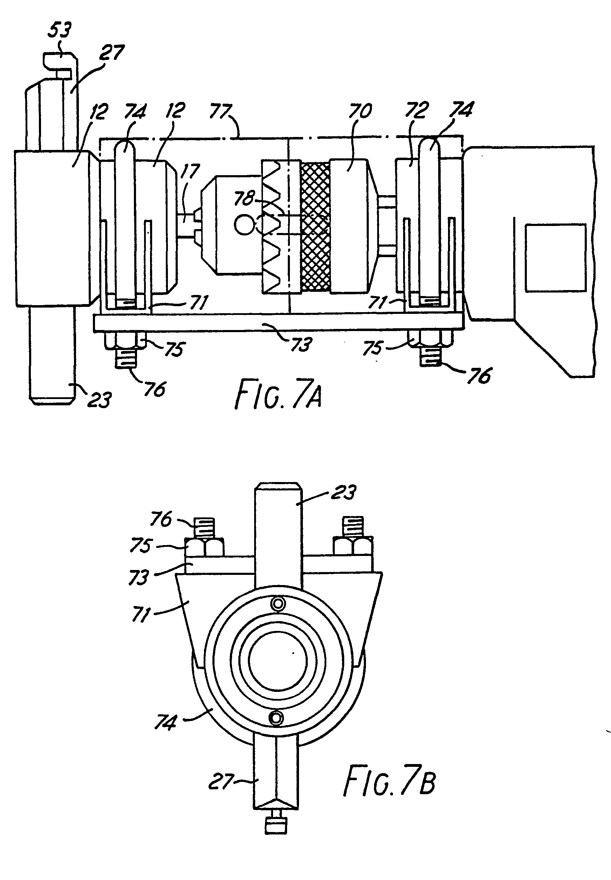

Conventionally where the drive has been taken from a power drill or the like the nibbling tool has been held by the user on to the drill while in use. Figures 7A and 7B show a means for mounting the nibbling tool to an external drive such as as a drill so that it need not be manually held during use. A drill head 70 is shown engaged with the projecting end 17 of the shaft 14 of the nibbling tool. A pair of clamp supports 71 having arcuate surfaces dimensioned to engage round the body 12 of the tool and a similar body portion 72 of the drill engage a base plate 73. A pair of U-bar clamps 74 extend over the other sides of the body portions 12 and 72 through bores in the clamp supports 71 and baseplate 73 and are secured thereto by nuts 75 engaging their threaded ends 76. A guard 77 may be provided mounted by flanges on the baseplate. This guard is split into two halves to facilitate fitting of the motor drive to the nibbling tool and the halves are secured together via a slot 78 allowing use of a screwed fastener. The drill with nibbling tool may be mounted on a work bench or the like, leaving both the operator's hands free to guide the sheet being cut.

## Claims

1. A nibbling tool for cutting a channel in sheet material by relative movement between the tool and the material in the direction of the channel comprising a body (12), a punch (33), drive means for reciprocating the punch, a die (27) mounted to the body and having a main body portion defining a channel (40) for guiding the punch for reciprocating movement, a lower portion (53) in which the lower end of the punch is received and a web portion (55) connecting the main portion and the lower portion, the punch and die having cooperating substantially circular cutting edges (57, 58) extending transversely of said direction of relative movement such that each reciprocating movement removes a crescent shaped chip of material, the web portion having a width substantially corresponding to the transverse width of the cutting edges in a direction normal to the length of the channel characterised in that the corners (55A) connecting the web portion (55) with the main body portion (27) and/or the lower guide portion (53) are radiused or chamfered so that they serve, as the web tracks through the cut, to remove sharp edges or burrs by vibrating against them.

2. A nibbling tool according to claim 1 characterised in that the die (27) is mounted to the body (12) by retaining means (29, 30) which when released allow the die to be rotated about its axis without axial movement or to be removed from and re-connected to the body without opening up the body or disconnecting other parts.

3. A nibbling tool according to claim 2 characterised by releasable connecting means (42) connecting the punch to the drive means (41—45) such that when the die (27) is removed from the body (12) the punch (33) can be removed from the body without dismantling the drive means.

4. A tool according to claim 2 or claim 3 characterised in that the die is formed in a single piece and has a circular sectioned shank (28) defining at least one locating recess (29) into which the retaining means (30) which is movably mounted in the body (12) can be inserted to locate the die against axial and rotational movement, the shank (28) being a good sliding fit in a bore (22) in the body (12).

5. A tool according to any of claims 1 to 4 in which the punch (33) has a shaft portion (36) and a head portion (38) connected to the shaft portion by a connecting portion (37), characterised in that the connecting portion (37) is tapered.

6. A tool according to Claim 5 characterised in that the connecting portion (37) is eccentrically mounted so that its edge remote from the cutting edge is aligned with the shaft portion.

7. A tool according to any of claims 1 to 6 characterised in that the gap between the shearing faces of the die and punch is no more than 2.54 thousandths of a centimetre (one thousandth of an inch).

8. A tool according to any of claims 1 to 7 characterised in that the punch (33) is formed in a single piece and by further guide means (26) arranged to receive and guide the upper end of the punch (33) throughout its reciprocating movement.

9. A tool according to claim 8 characterised by a handle (23) connectable to the body (12) and containing a bearing (26) defining the further guide means and in that when the handle (23) is removed the punch (33) can be released and withdrawn through an opening (22) in the body for receiving the handle, without dismantling the drive means (41—45).

10. A tool according to any of claims 1 to 9 characterised by connecting means (71—78) of holding the tool to an external drive.

11. A tool according to any of claims 1 to 10 characterised in that the said corners (55A) are radiused or chamfered at 0.38 mm.

**Patentansprüche**

1. Nibbelwerkzeug zum Schneien einer Nut in flächiges Material bei relativer Bewegung des Werkzeugs zu dem Material in Richtung der Nut, mit einem Gehäusekörper (12), einem Scherstempel (33), Antriebsmitteln zur alternierenden Bewegung des Scherstempels einem am Gehäusekörper (12) angeordneten Scherkopf (27) mit einem Hauptteil, das zur Führung der alternierenden Bewegung des Scherstempels einen Kanal (40) bildet, einem Unterteil (53), in welchem das untere Ende des Scherstempels eingreift, und einem Stegabschnitt (55), der das Hauptteil mit dem Unterteil verbindet, wobei der Scherstempel und der Scherkopf zusammenwirkende, im wesentlichen kreisförmige Schneidkanten (57, 58) aufweisen, die sich transversal zur relativen Bewegungsrichtung erstrecken, so daß jede alternierende Bewegung einen halbmondförmigen Materialspan abträgt, wobei der Stegabschnitt eine Breite hat, die im wesentlichen der transversalen Weite der Schneidkanten senkrecht zur Längserstreckung der Nut entspricht, dadurch gekennzeichnet, daß die den Stegabschnitt mit dem Hauptteil (27) und/oder dem Führungsteil (53) verbindenden Ecken (55A) ausgerundet oder abgeschrägt sind, so daß diese, wenn der Steg durch den Schnitt läuft, scharfe Kanten oder Grate durch die Vibration gegen diese beseitigen.

2. Nibbelwerkzeug nach Anspruch 1, dadurch gekennzeichnet, daß der Scherkopf (27) mittels Haltemitteln (29, 30) am Gehäusekörper (12) befestigt ist, die im gelösten Zustand eine Rotation des Scherkopfs um seine Achse ohne axiale Bewegung oder das Entfernen und das Anbringen des Scherkopfs am Gehäusekörper ohne Öffnen des Gehäusekörpers oder Lösen anderer Teile gestatten.

3. Nibbelwerkzeug nach Anspruch 2, gekennzeichnet durch lösbare Verbindungsteile (42) zur Verbindung des Scherstempels mit den Antriebsmitteln (41—45), so daß bei vom Gehäusekörper (12) abgenommenem Scherkopf (27) der Scherstempel (33) vom Gehäusekörper ohne Demontage der Antriebsmittel gelöst werden kann.

4. Werkzeug nach Anspruch 2 oder 3, dadurch gekennzeichnet, daß der Scherkopf einstückig ausgebildet ist und einen zylindrischen Schaft (28) mit wenigstens einer Positionier-Aussparung (29) aufweist, in die das im Gehäusekörper (12) beweglich angeordnete Haltemittel (30) zur Festlegung des Scherstempels gegen axiale und rotatorische Bewegung einführbar ist, wobei der Schaft (28) einer Bohrung (22) im Gehäusekörper (12) einen Gleitsitz bildet.

5. Werkzeug nach einem der Ansprüche 1 bis 4, wobei der Scherstempel (33) einen Achsabschnitt (36) und ein über einen Verbindungsabschnitt (37) verbundenes Kopfteil (38) aufweist, dadurch gekennzeichnet, daß der Verbindungsabschnitt (37) verjüngt ist.

6. Werkzeug nach Anspruch 5, dadurch gekennzeichnet, daß der Verbindungsabschnitt (37) exzentrisch so angeordnet ist, daß seine der Schneidkante fernliegende Kante mit dem Achsabschnitt in einer Linie angeordnet ist.

7. Werkzeug nach einem der Ansprüche 1 bis 6, dadurch gekennzeichnet, daß der Spalt zwischen den Scherflächen des Scherkopfs und des Scherstempels höchstens $2.54 \cdot 10^{-5}$ m beträgt.

8. Werkzeug nach einem der Ansprüche 1 bis 7, dadurch gekennzeichnet, daß der Scherstempel (33) einstückig ausgebildet ist, und daß ein weiteres Führungsteil (26) zur Aufnahme und Führung des oberen Endes des Scherstempels (33) während seiner alternierenden Bewegung vorgesehen ist.

9. Werkzeug nach Anspruch 8, dadurch gekennzeichnet, daß ein mit dem Gehäusekörper (12) verbindbarer und ein das weitere Führungsteil bildende Lager (26) aufweisender Handgriff (23) vorgehen ist, und daß nach Entfernen des Handgriffs (23) der Scherstempel (33) lösbar und durch eine Öffnung (22) im Gehäusekörper (12) zur Aufnahme des Handgriffs ohne Demontage der Antriebsmittel (41—45) entnehmbar ist.

10. Werkzeug nach einem der Ansprüche 1 bis 9, gekennzeichnet durch Verbindungsteile (71—78) zur Befestigung des Werkzeugs an einem externen Antrieb.

11. Werkzeug nach einem der Ansprüche 1 bis 10, dadurch gekennzeichnet, daß die Ecken (55A) mit 0.38 mm ausgerundet oder abgeschrägt sind.

**Revendications**

1. Grignoteuse pour le découpage d'une saignée dans une feuille de matèriau, par déplacement relatif de l'outil et du matériau dans la direction de la saignée, comprenant un corps (12), un outil de grignotage (33), un moyen d'entrainement pour faire aller et venir le poinçon, une matrice (27) montée sur le corps et présentant un partie principale définissant une saignée (40) pour le guidage du poinçon dans son déplacement alternatif, une partie inférieure (53) dans laquelle est reçu le poinçon et une partie étroite (55) reliant la partie principale et la partie inférieure, le poinçon et la matrice possédant des arêtes coupantes circulaires (57, 58) qui coopèrent et s'étendent transversalement à la direction du déplacement relatif, de telle sorte que chaque mouvement alternatif enlève un copeau de matière en forme de croissant, la portion étroite possédant une largeur correspondant pratiquement à la largeur transversale des arêtes de coupe dans une direction perpendiculaire à la longueur de la saignée, caractérisée en ce que les angles (55A) reliant la partie étroite (55) à la partie principales (27) et/ou à la partie de guidage inférieure (53) sont arrondis ou chanfreinés de sorte qu'ils servent lorsque la portion étroite suit la coupe d'un bout à l'autre, à enlever les arêtes aigues ou les ébarbures par vibrations contre elles.

2. Grignoteuse selon la revendication 1, caractérisée en ce que la matrice (27) est montée sur le corps (12) par des moyens de fixation (29, 30) qui lorsqu'ils sont débrayés, permettent à la matrice de tourner autour de son axe sans déplacement axial, ou d'être retirée du corps ou d'y être replacée sans avoir à ouvrir ce dernier ou à deconnecter les autres parties.

3. Grignoteuse selon la revendication 2, caractérisée par des moyens de connexion débrayables (42) reliant le poinçon au moyen d'entrainement (41, 45), de telle façon que quand la matrice (22) est retirée du corps (12), le poinçon (33) peut être retiré du corps corps (12) sans démontage des moyens d'entrainement.

4. Outil selon la revendication 2 ou 3, caractérisé en ce que la matrice est formée d'une seule pièce et possède une queue de fixation de section circulaire (28) délimitant au moins un évidement de mise en place (29) dans lequel le moyen de fixation (30), qui est monté sur le corps (12) de façon mobile, peut être introduit pour positionner la matrice contre un mouvement axial et rotatif, la queue de fixation (28) s'ajustant bien de façon glissante dans un alésage (22) du corps (12).

5. Outil selon l'une des revendications 1 à 4, sur lequel le poinçon (33) comporte une portion d'arbre (36) et une portion de tête (38), reliée à la portion d'arbre par une partie de liaison (37), caractérisé en ce que la partie de liaison (37) est conique.

6. Outil selon la revendication 5, caractérisé en ce que la partie de liasson (37) est montée de façon excentrée de sorte que son arête éloignée de l'arête de coupe, est alignée avec la portion d'arbre.

7. Outil selon l'une des revendications 1 à 6, caractérisé en ce que l'intervalle entre les faces de cisaillement de la matrice et le poinçon ne dépasse pas 2.54 millièmes de cm. (un millième de pouce).

8. Outil selon l'une des revendications 1 à 7, caractérisé en ce que le poinçon (33) est formé d'une seule pièce, et par un autre moyen de guidage (26) conçu pour recevoir et guider l'extrémité supérieure du poinçon (33) pendant toute la durée de son mouvement de va et vient.

9. Outil selon la revendication 8, caractérisé par une poignée (23) qui peut être reliée au corps (12) et comprenant un palier (26) constituant l'autre moyen de guidage et en ce que, lorsque la poignée est enlevée, le poinçon (33) peut être dégagé et retiré à travers une ouverture (22) dans le corps pour recevoir la poignée sans avoir à démonter les moyens de guidage (41—45).

10. Outil selon l'une des revendications 1 à 9, caractérisé par des moyens de connexion (71—78) pour raccorder l'outil à un système d'entrainement extérieur.

11. Outil selon l'une des revendications 1 à 10, caractérisé en ce que les angles (55A) sont arrondis ou chanfreinés sur 38 mm.

FIG.1

FIG.2

FIG 3A

FIG.3B

FIG.3c

FIG.4B

FIG.4A

EP 0 208 493 B1

FIG.5

FIG.6A

FIG.6B

3

FIG.7A

FIG.7B

Fig. 8

FIG.9A

FIG.9B

FIG.9c